# EUROPÄISCHE PATENTSCHRIFT

(11) **EP 0 785 679 B1**
(45) Veröffentlichungstag und Bekanntmachung des Hinweises auf die Patenterteilung: **14.03.2001**
(21) Anmeldenummer: 96116637.8
(22) Anmeldetag: 17.10.1996
(51) Int. Cl.: H04N 5/63

(54) **Energiesparbetrieb bei einem Kommunikationsgerät**
Energy-saving operation for communication apparatus
Fonctionnement économique en énergie pour un appareil de communication

(30) Priorität: 25.01.1996 DE 19602535
(43) Veröffentlichungstag der Anmeldung: 23.07.1997
(73) Patentinhaber: GRUNDIG Aktiengesellschaft, 90471 Nürnberg (DE)
(72) Erfinder: Hegendörfer, Max, Beuthener Strasse 41, 90471 Nürnberg (DE)

(56) Entgegenhaltungen:
- EP-A- 0 610 700
- EP-A- 0 705 033
- US-A- 4 808 992

## Beschreibung

Die Erfindung betrifft ein Kommunikationsgerät gemäß dem Oberbegriff des Anspruchs 1.

Die Erfindung betrifft weiter ein Verfahren zur Stromeinsparung bei einem Kommunikationsgerät gemäß dem Oberbegriff des Anspruchs 8.

Ein derartiges Kommunikationsgerät ist beispielsweise ein Fernsehgerät, das über Verbindungsleitungen mit Steckverbindungen mit weiteren Geräten, beispielsweise mit einem Videorecorder, einem Satellitenempfänger oder einem Bildplattengerät gekoppelt werden kann. Zur Kopplung der verschiedenen Geräte werden heute in der Regel sogenannte SCART-Steckverbindungen verwendet. Eine derartige Steckverbindung besteht aus einer beispielsweise am Fernsehgerät und einem Videorecorder angeordneten Buchse und aus einem Verbindungskabel mit entsprechenden Steckern am Ende.

Aus der EP 0 243 740 B1 ist ein Verfahren zur Überführung von Femsehempfänger-Abstimmdaten zwischen einem Fernsehempfänger und einem Videorecorder beschrieben. Dabei werden über eine zwischen Videorecorder und Fernsehempfänger vorhandene Verbindung, die als digitaler Datenbus ausgebildet ist, die die verschiedenen Programme kennzeichnenden Empfangsfrequenzen vom Fernsehempfänger an den Videorecorder übermittelt und dort abgespeichert.

Aus der EP 0 610 700 ist ein Fernsehempfänger bekannt, bei dem im Standby-Betrieb alle Schaltungsteile abgeschaltet werden, mit Ausnahme derjenigen, die für die Erkennung der Einschaltinformation notwendig sind.

US-A-4 808 992 zeigt ein Audio/Video system mit einer digitalen Busverbindung, bei dem bestimmte Geräte mittels Statussignalen aktiviert oder deaktiviert werden können.

Der Erfindung liegt die Aufgabe zugrunde, den Stromverbrauch bei einem Kommunikationsgerät auf einfache Weise zu verringern.

Diese Aufgabe wird durch die in den Ansprüchen 1 und 8 angegebenen Merkmale gelöst.

Der Erfindung liegt die Erkenntnis zugrunde, daß ein Kommunikationsgerät, beispielsweise ein Fernsehgerät, zwar heute in der Regel über die Möglichkeit zur Aktivierung eines sogenannten "Standby"-Betriebs verfügt, in dem bestimmte Schaltungsteile des Kommunikationsgeräts deaktiviert werden und eine Aktivierung über die Fernbedienung möglich ist. Dennoch weist das Kommunikationsgerät auch in dieser Betriebsart des Energiesparbetriebs noch eine nicht zu unterschätzenden Stromverbrauch auf. Eine Möglichkeit zur Lösung dieses Problems könnte sein, die Stromversorgung des gesamten Kommunikationsgeräts nach einer vorwählbaren Abschaltzeit vollständig vom Netz zu trennen. Dies hat jedoch den Nachteil, daß zum einen das Kommunikationsgerät über die Fernbedienung nicht wieder ohne weiteres aktivierbar ist und zum anderen auch ein Datenaustausch bzw. eine Datenübertragung zu und von den mit dem Kommunikationsgerät gekoppelten weiteren Peripheriegeräten oder zwischen Teileinrichtungen des Kommunikationsgeräts nicht mehr möglich sind. Ein derartiges Kommunikationsgerät kann beispielsweise ein aus den Teileinrichtungen Fernsehgerät und Videorecorder bestehendes Kombinationsgerät sein, dessen Teileinrichtungen in einem Gehäuse integriert sind. Das Kommunikationsgerät kann aber auch beispielsweise ein Steuergerät für mehrere Peripheriegeräte, beispielsweise ein Fernsehgerät, einen Videorecorder, einen Satellitenempfänger etc., sein. Durch die Kopplung zwischen Teileinrichtungen des Kommunikationsgeräts bzw. durch die Kopplung des Kommunikationsgeräts zu weiteren Peripheriegeräten kann beispielsweise erreicht werden, daß durch das Einschalten des Videorecorders zur Wiedergabe auch eine Aktivierung des mit dem Videorecorder gekoppelten Fernsehgeräts veranlaßt wird. Mit Hilfe der Erfindung wird es möglich, daß die Datenverbindung zwischen den Teileinrichtungen des Kommunikationsgeräts bzw. zwischen dem Kommunikationsgerät und angeschlossenen Peripheriegeräten in einen Schlafzustand versetzt wird. Eine Umschaltung dieses Schlafzustandes, in dem die Peripherielogikeinrichtung und damit die Datenverbindung deaktiviert ist, gegenüber einem Wachzustand, in welchem die Datensendeempfangseinrichtung, d.h. die Peripherielogikeinrichtung und damit die Datenverbindung aktiv ist, erfolgt mit Hilfe des Statussignals. Das Statussignal liefert ständig eine Statusmeldung, die anzeigt, ob eine Datenverbindung vorgesehen ist oder nicht. Hierdurch kann im Standby-Betrieb des Kommunikationsgeräts in der Regel auch die Peripherielogikeinrichtung und damit die beispielsweise als Datenbus ausgebildete Verbindung zu Peripheriegeräten inaktiv sein. Hierdurch ergibt sich ein wesentlich verringerter Energieverbrauch im Standby-Betrieb gegenüber einem herkömmlichen Standby-Betrieb, in welchem die Peripherielogikeinrichtung und damit der Datenbus, der mit der Peripherielogikeinrichtung gekoppelt ist, auch im Standby-Betrieb permanent aktiv ist. Das Statussignal dient somit als Wecksignal für die Teileinrichtungen des Kommunikationsgerätes bzw. für die mit dem Kommunikationsgerät koppelbaren Peripheriegeräte. Die Übertragung des Statussignals kann auf einfache Weise durch eine ohnehin vorhandene Leitung der vorgesehenen Steckverbindungen erfolgen, ein wesentlicher Aufwand ist somit nicht erforderlich. Hierzu kann somit eine möglicherweise nicht belegte Leitung der Datenverbindung verwendet werden oder es wird eine bereits belegte Leitung verwendet, wobei als Statussignal dann eine Signalform bzw. ein Signal gewählt wird, das gegenüber den sonst über diese Leitung übertragenen Signalen eine abweichende Signalcharakteristik, beispielsweise eine abweichende Signalform aufweist.

Eine einfache und kostengünstige Realisierung eines Energiesparbetriebs kann dadurch realisiert werden, daß das Statussignal zur Ansteuerung eines Anschlusses der Verbindung zwischen den Teileinrichtungen der Komunikationsgerät und/oder zwischen der Verbindung zwischen dem Kommunikatinsgerät und mindestens einem Peripheriegerät und zur Übermittlung an die Teileinrichtungen des Komunikationsgeräts und/oder an die mit der Komunikationsgerät koppelbaren Peripheriegeräte vorgesehen ist.
Ein technisch einfache Übermittlung des Statussignals ergibt sich dadurch, daß zur Kopplung der Teileinrichtungen des Komunikationsgeräts und/oder der mit dem Komunikationsgerät koppelbaren Peripheriegeräte ein Datenbus vorgesehen ist, wobei zur Übertragung der über den Datenbus zu übertragenden Signale eine leitungsgebundene, insbesondere ein digitaler Datenbus oder eine drahtlose Verbindung, insbesondere ein als optische Verbindung ausgebildeter digitaler Datenbus vorgesehen ist.

Die Energieeinsparung kann ohne zusätzlichen Leitungsaufwand dadurch sichergestellt werden, daß zur Übertragung des Statussignals eine für die sonstige Übertragung nicht benötigte Leitung oder eine bereits belegte Leitung vorgesehen ist., wobei bei der Übertragung des Statussignals über eine bereits belegte Leitung ein sich von den übrigen über diese Leitung übertragenen Signale unterscheidendes Signal vorgesehen ist.

Ein Anwendungsfall für ein Kommunikationsgerät ergibt sich als Steuergerät für ein Fersehgerät, ein Videoaufzeichnungsgerät, einen Satellitenempfänger und/oder ein sonstiges digitales Wiedergabegerät.

Das Kommunikationsgerät kann jedoch auch ein Fersehgerät, ein Videoaufzeichnungsgerät, ein Satellitenempfänger und/oder ein sonstiges digitales Wiedergabegerät sein.

Eine einfache Aktivierung bzw. Deaktivierung des Energiesparbetriebs kann dadurch erfolgen, daß das Steuersignal über eine Fernbedienung und/oder über eine externen Eingang aktivierbar ist.

Im folgenden wird die Erfindung anhand der in den Figuren dartgestellten Ausführungsbeispiele näher beschrieben und erläutert.

Es zeigen:
Fig. 1 ein erstes Ausführungsbeispiel eines vernetzten Kommunikationssystems,
Fig. 2 ein weiteres Ausführungsbeispiel eines Kommunikationssystems,
Fig. 3 ein Blockschaltbild eines Kommunikationsgerätes,
Fig. 4 ein Ablaufdiagramm zur Aktivierung bzw. Deaktivierung einer Datenleitung,
Fig. 5 eine Realsierungsmöglichkeit für ein derartiges Statussignal und
Fig. 6 ein weiteres Ausführungsbeispiel für ein Statussignal.

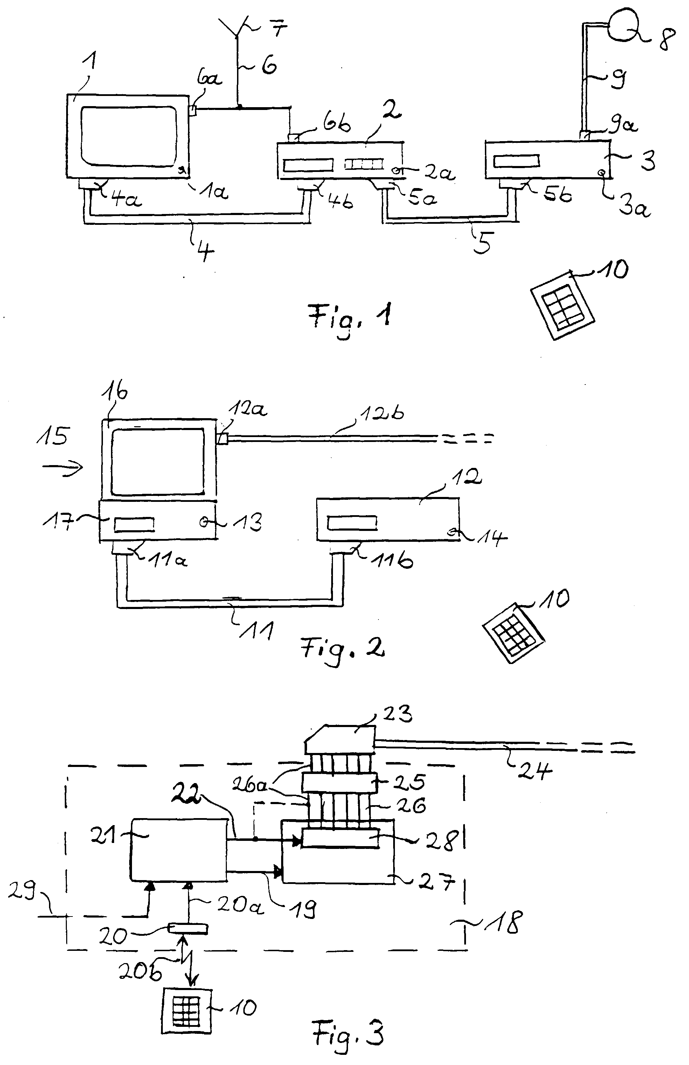

Das in Figur 1 dargestellte Kommunikationssystem besteht aus einem als Fernsehgerät 1 ausgebildeten ersten Kommunikationsgerät, aus einem als Videorecorder 2 ausgebildeten zweiten Kommunikationsgerät sowie aus einem als Satellitenempfänger 3 ausgebildeten dritten Kommunikationsgerät. Das Fernsehgerät 1 ist über eine Verbindungsleitung 4, die Steckverbindungen 4a, 4b aufweist, mit dem Videorecorder 2 gekoppelt. In gleicher Weise ist der Videorecorder 2 über eine Verbindungsleitung 5 über Steckverbindungen 5a, 5b mit dem Satellitenempfänger 3 verbunden. Über eine Antennenleitung 6 mit Steckverbindungen 6a, 6b werden dem Fernsehgerät 1 sowie dem Videorecorder 2 Empfangssignale einer Antenne 7 zugeführt. Der Satellitenempfänger 3 ist über ein Antennenkabel 9 über eine Steckverbindung 9a mit einer Satellitenantenne 8 verbunden. Das Fernsehgerät 1, der Videorecorder 2 sowie der Satellitenempfänger 3 weisen darüberhinaus Infraroteingänge 1a, 2a, 3a auf, die mit einem in einer Fernbedienung 10 angeordneten Infrarotsender zusammenwirken.

Da in Fig. 1 dargestellte Ausführungsbeispiel eines Kommunikationssystems stellt lediglich eine Möglichkeit der Konfiguration für ein derartiges Kommunikationssystem dar. Eine andere Konfiguration beinhaltet beispielsweise die Möglichkeit, daß das Fernsehgerät 1 als sogenannter Master über die Verbindungsleitungen 4, 5 auch die Peripheriegeräte 2 und 3 ansteuert. Umgekehrt ist es ebenso möglich, daß beispielsweise über den Videorecorder 2 für eine Wiedergabe über die Datenverbindung 4 auch das Fernsehgerät 1 aktiviert wird oder beim Einschalten des Satellitenempfängers eine Aktivierung des Fernsehgeräts 1 erfolgt. Die Kommunikationsgeräte 1, 2, 3, des in Fig. 1 dargestellten Kommunikationssystems weisen in Fig. 1 nicht dargestellte im folgenden auch als Peripherielogikeinrichtungen bezeichnete Datensendeempfangseinrichtungen auf, die mit den Steckverbindungen 4a, 4b, 5a, 5b der jeweiligen Kommunikationsgeräte 1, 2, 3 in Verbindung stehen. Ist das Kommunikationssystem in Betrieb, d.h. erfolgt beispielsweise über den Videorecorder 2 eine Wiedergabe über das Fernsehgerät 1 oder über den Satellitenempfänger 3 der Empfang auf den Fernsehgerät 1 dargestellten Satellitenprogramms, so erfolgt über die Datenverbindungen 4, 5 eine entsprechende Datenübertragung. Um in den Energiesparbetrieb, d.h. in den sogenannten Standby-Betrieb zu gelangen, wird mit Hilfe der Fernbedienung 10 beispielsweise das Fernsehgerät 1 in diesen Energiesparzustand versetzt. Hierdurch erfolgt eine Deaktivierung von Schaltungsteilen des Fernsehgeräts. Hierdurch wird im Fernsehgerät 1 ein Schaltsignal ausgelöst, welches an die im Fernsehgerät 1 angeordnete Peripherielogikeinrichtung weitergeleitet wird. Infolge dieses Schaltsignals wird im Fernsehgerät 1 ein Statussignal erzeugt, das über die Verbindungsleitungen 4, 5 auch an den Videorecorder 2 sowie an den Satellitenempfänger 3 weitergeleitet wird. Hierdurch werden auch die in den Videorecorder 2 sowie in den Satellitenempfänger 3 vorhandenen Peripherielogikeinrichtungen in einen sogenannten Schlummerzustand versetzt. In diesem Schlummerzustand ist dann lediglich ein Prozessor aktiv, der die für das Statussignal vereinbarte Leitung überwacht. Die Bereitstellung von lediglich diesem einen Prozessor im Gegensatz zur Bereitstellung der gesamten Peripherielogikeinrichtung kommt es zu einer erheblichen Stromeinsparung im Standby-Betrieb, ohne daß für den Benutzer in Bezug auf die Bedienerfreundlichkeit des Kommunikationssystems Einbußen entstehen. Denn mit Hilfe der Fernbedienung 10 kann der Benutzer jederzeit wieder eines der Kommunikationsgeräte 1, 2, 3 aus dem Standby-Betrieb in einen aktiven Betrieb zurückversetzen, wobei dann von dem jeweils aktivierten Kommunikationsgerät 1, 2, 3 dann auch eine ggfs. notwendige Aktivierung der benötigten Peripheriegeräte über das bereits beschriebene Statussignal erfolgen kann. Gegenüber bisher bekannten Kommunikationssystemen, bei denen die zwischen den einzelnen Kommunikationsgeräten bzw. Peripheriegeräten bestehenden Datenverbindungen ständig aktiv sind, ergibt sich somit eine erhebliche Reduzierung des Energieverbrauchs. Anstelle der in Fig. 1 dargestellten leitungsgebundenen Verbindungen 4, 5 ist es auch möglich, eine drahtlose Verbindung, beispielsweise eine optische Verbindung, vorzusehen, die beispielsweise ebenfalls als digitaler Datenbus ausgebildet sein kann.

Fig. 2 zeigt ein weiteres Ausführungsbeispiel eines Kommunikationssystems mit einem Kommunikationsgerät 15, das aus einem als Fernsehgerät 16 ausgebildeten ersten Teilgerät und aus einem als Videorecorder 17 ausgebildeten zweiten Teilgerät gebildet wird. Das Kommunikationsgerät 15 ist über eine Verbindungsleitung 11 mit Steckverbindungen 11a, 11b mit einem Bildplattenwiedergabegerät 12 gekoppelt. Das Kommunikationsgerät 15 weist darüberhinaus einen Eingang 12a mit einer Verbindungsleitung 12b auf, die beispielsweise als Koaxialanschluß für ein Breitbandkabelnetz oder als Glasfaseranschluß für ein Glasfasernetz ausgebildet ist. Das in Fig. 2 dargestellte Kommunikationssystem ist über eine Fernbedienung 10, die mit Empfangseinheiten 13, 14 der Kommunikationsgeräte 12, 15 zusammenwirkt, bedienbar.

In Bezug auf die Funktion des in Fig. 2 dargestellten Kommunkationssystems wird im wesentlichen auf die bereits im Zusammenhang mit der Fig. 1 gemachten Ausführungen verwiesen. Im Gegensatz zu den in Fig. 1 dargestellten Kommunikationssystem ist jedoch bei dem in Fig. 2 gezeigten Kommunikationssystem eine Aktivierung bzw. Deaktivierung der Peripherielogikeinrichtung der Kommunikationsgeräte 12, 15 nicht lediglich durch das Ein- bzw. das Ausschalten des Energiesparmodus über die Fernbedienung 10 möglich, sondern das Schaltsignal zur Erzeugung des Statussignals kann auch "extern" über den externen Eingang 12a, beispielsweise eines Kabelnetzes, erfolgen. Ein Anwendungsfall für eine derartige externe Ansteuerung ist beispielsweise bei Hotel-Kabelnetzen möglich, wo sich ein Hotelgast über eine derartige externe Ansteuerung des Fernsehgeräts bzw. Videorecorders auf vorgebbare Art und Weise wecken lassen kann oder sonstige Informationen an Hotelgäste übermittelt werden können. Hierzu sind als Statussignal beispielsweise zwei verschiedene Signalwerte bzw. Signalformen vereinbart, wobei eine Signalform bzw. ein Signalwert dem Schlafmodus die andere Signalform bzw. der andere Signalwert dem Aktivmodus zugeordnet ist. Es ist auch möglich, neben einer reinen Statusinformation auch eine Kennung für bestimmte Teilnehmer des Kabelnetzes zu übertragen.

Bei einem anderen Konfigurationsbeispiel ist es auch möglich, daß die externe Verbindung 12 beispielsweise Informationen zur Teilnahmeberechtigung bzw. zur Verschlüsselung bestimmter Fernsehprogramme übermittelt, nachdem über das Statussignal die Peripherielogikeinrichtung aktiviert wurde. Nach Übermittlung dieser Daten wird mit Hilfe des Statussignals das Kommunikationsgerät 15 erneut in den stromsparenden Standby-Betrieb versetzt, in dem auch die Peripherielogikeinrichtung bis auf die Überwachung des Statussignals deaktiviert ist.

Fig. 3 zeigt ein Blockschaltbild eines Kommunikationsgerätes 18 in schematischer Darstellung. Dabei wurden lediglich die im Zusammenhang mit der Erfindung benötigten Komponenten des Kommunikationsgerätes 18 dargestellt. Das Kommunikationsgerät 18 weist einen Infrarotbaustein 20 auf, der zum Empfang von Signalen einer Fernbedienung 10 über eine Infrarotstrecke 20b vorgesehen ist. Der Infrarotbaustein 20 liefert ein Steuersignal 20a an eine Stromsparschaltung 21, die eine Aktivierung bzw. Deaktivierung von Schaltungsteilen des Kommunikationsgeräts 18 ermöglicht. Die Stromspareinrichtung 21 liefert ein Ausgangssignal 19 zur Deaktivierung von vorgebbaren Schaltungsteilen des Kommunikationsgeräts 18. Die für den Energiesparbetrieb zu deaktivierenden Schaltungsteile des Kommunikationsgeräts 18 sind in einem Block 27 zusammengefaßt. Die Stromsparschaltung 21 liefert ein weiteres Ausgangssignal 22, welches das bereits im Zusammenhang mit den Fig. 1 und 2 beschriebene Statussignal repräsentiert. Das Statussignal 22 wird einerseits ein an die Peripherielogikeinrichtung 28 und andererseits an die Buchse 25, die beispielsweise als sogenannte SCART-Buchse ausgebildet ist, weitergeleitet. Mit der Buchse 25 ist über Kontaktstifte 26 eines Steckers 23 ein Verbindungskabel 24 mit in Fig. 3 nicht weiter dargestellten Peripheriegeräten gekoppelt. Die Stromsparschaltung 21 ist darüberhinaus über eine externe Steuerverbindung 29 ansteuerbar.

Eine Aktivierung der Stromsparschaltung 21 erfolgt bei dem in Fig. 3 dargestellten Ausführungsbeispiel mit Hilfe der Fernbedienung 10, wobei über die Infrarotverbindung 21 und den Infrarotempfänger 20, das entsprechende Schaltsignal zum Deaktivieren von Schaltungsteilen des Kommunikationsgeräts 18 erfolgt. Eine weitere Aktivierungsmöglichkeit besteht über die externe Verbindung 29, die beispielsweise mit einem Kabelnetz gekoppelt ist. Das Vorsehen einer derartigen Verbindungsleitung 29 ist jedoch optional. Die Stromsparschaltung 21 erzeugt im Ansprechen auf das Schaltsignal 20a, 29 das Statussignal 22 für die Peripherielogikeinrichtung 28, wodurch die Peripherielogikeinrichtung 28 des Kommunikationsgerätes 18 an- oder abgeschaltet wird. In der Peripherielogikeinrichtung 28 bleibt lediglich ein CMOS-Prozessor aktiv, der die Statusleitung 26a, d.h. das Statussignal überwacht bzw. auswertet. Durch diese Auswertung ist es jederzeit möglich, die Stromsparschaltung 21 entweder über die Schaltsignale 20a, 29 oder über die Verbindungsleitung 24 von einem Peripheriegerät zugeführtes externes Statussignal 22 zu aktivieren bzw. deaktivieren.

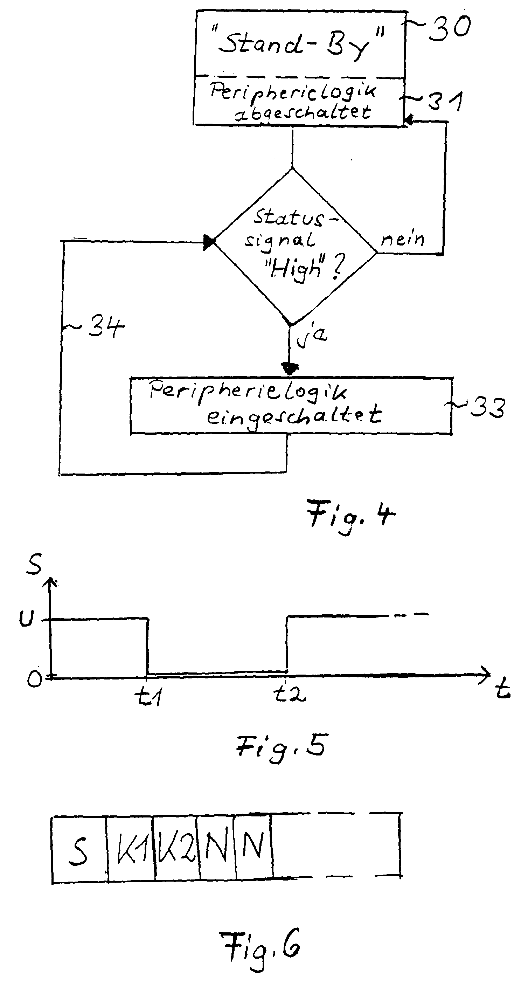

Fig. 4 zeigt einen prinzipiellen Ablauf zum An- bzw. Abschalten der Peripherielogikeinrichtung. Im Block 30 ist dabei beispielshaft angegeben, daß sich das Kommunikationsgerät im Energiesparmodus, d.h. im Standby-Betrieb befindet. Weiterhin ist beispielhaft im Block 31 angegeben, daß die Peripherielogikeinrichtung abgeschaltet ist. Dies ist dann der Fall, wenn das Statussignal den Energiesparzustand anzeigt. In diesem Betriebszustand ist lediglich ein Prozessor aktiv, der für die Übertragung des Statussignals vereinbart ist, überwacht. Im nächsten Schritt erfolgt im Block 32 die Abfrage, ob das Statussignal "High" ist, d.h. ob das Statussignal ,das für den Ein-Zustand der Peripherielogikeinrichtung vereinbarten Wert aufweist. Ist dies nicht der Fall, so bleibt die Peripherielogikeinrichtung abgeschaltet. Ergibt die Auswertung des Statussignals, daß das Statussignal "High" ist, so wird die Peripherielogikeinrichtung eingeschaltet, wie dies im Block 33 entsprechend symbolisiert ist. Auch nach dem Einschalten der Peripherielogikeinrichtung wird das Statussignal weiter ausgewertet, wie dies durch die Rückführung 34 zur Abfrage des Statussignals im Block 32 schematisch dargestellt ist. Der in Fig. 4 gezeigte Ablauf stellt lediglich eine Möglichkeit für den Ablauf der Auswertung des Statussignals dar, eine andere Vorgehensweise ist im Rahmen der Erfindung ebenfalls möglich.

Fig. 5 zeigt eine mögliche Signalform für ein Statussignal S. Das Statussignal ist so ausgebildet, daß es zwei Betriebszustände, beispielsweise zwei Spannungszustände 0 V und einen vorgebbaren Spannungswert U annehmen kann. Beträgt das Statussignal S den Spannungswert U, so wird die Peripherieeinrichtung in der bereits beschriebenen Weise angeschaltet, beträgt das Statussignal S wie in Fig. 5 den Zeitabschnitt t1 und t2 den Wert 0, so ist die Peripherielogikeinrichtung abgeschaltet. Eine derartige Erzeugung eines solchen Statussignals ist beispielsweise auf einfache Weise über einen Transistor mit Basiswiderstand ohne großen schaltungstechnischen Aufwand möglich.

Fig. 6 zeigt eine mögliche Variante, wie ein derartiges Statussignal mit weiteren Informationen kombiniert werden kann. Hierzu wird in einem ersten Zeitschlitz des der Peripherielogikeinrichtung zugeführten Signals eine den Status S kennzeichnende Information übertragen, d.h. ob die Peripherielogikeinrichtung anoder abgeschaltet werden soll. Sofern das Statussignal die Information enthält, die Peripherielogikeinrichtung einzuschalten, kann im zweiten und dritten Zeitschlitz beispielsweise eine Kennung K1, K2 übertragen werden, die ein bestimmtes Peripheriegerät kennzeichnet oder beispielsweise eine Kennung eines Teilnehmers eines Kommunikationsnetzes darstellt. In den folgenden Zeitschlitzen des in Fig. 6 dargestellten Signals, können dann entsprechende Nutzinformationen übertragen werden.

Als Anwendungsfall für ein derartiges in Fig. 6 dargestelltes Datensignal ergibt sich die Anwendungsmöglichkeit, bei einen in einem Hotel installierten Kabelnetz, bestimmte Hotelzimmer, d.h. bestimmte Hotelgäste individuell "anzusprechen". Ein weitererAnwendungsfall ist beispielsweise dann gegeben, wenn zu einem Teilnehmer eines sogenannter Pay-TV-Programms, bestimmte Informationen, die beispielsweise die Verschlüsselung des verwendeten Übertragungsverfahrens oder bestimmte Teilnehmerberechtigungen beinhalten, übermittelt werden sollen.

Durch die Erfindung wird es somit bei einem Kommunikationsgerät bzw. einem Kommunikationssystem möglich, auch bei einer Vielzahl miteinander vernetzter Peripheriegeräte einen wirksamen Energiesparbetrieb sicherzustellen.

Hierzu ist lediglich das Statussignal vorgesehen, das die für die interne oder externe Datenkommunikation benötigte Datensendeempfangseinrichtung entsprechend dem jeweiligen Status des Statussignals an- oder abgeschaltet wird.

## Patentansprüche

1. Kommunikationsgerät (1, 2, 3, 15, 18) mit einer Stromsparschaltung (21) zur Deaktivierung von Schaltungsteilen des Kommunikationsgeräts (1, 2, 3) und/oder mindestens eines mit dem Kommunikationsgerät (1) koppelbaren Peripheriegerätes (2, 3, 14) für einen Energiesparbetrieb, wobei das Kommunikationsgerät (1) zur Kopplung von mindestens zwei Teileinrichtungen (16, 17) des Kommunikationsgeräts (15) und/oder zur Kopplung des Kommunikationsgeräts (1, 2, 3, 15, 18) mit mindestens einem Peripheriegerät (2, 3, 14) eine Datensendeempfangseinrichtung (28), insbesondere eine Peripherielogikeinrichtung zur Steuerung einer Übertragung von Signalen zwischen den Teileinrichtungen des Kommunikationsgeräts (1) und/oder zwischen der Kommunikationsgerät (1, 2, 3, 15, 18) und mindestens einem Peripheriegerät (2, 3, 14, 18) aufweist,
**dadurch gekennzeichnet,**
daß die Stromsparschaltung (21) des Kommunikationsgeräts (1) im Ansprechen auf einen Schaltbefehl zur Erzeugung eines Statusignals (22) für die Datensendeempfangseinrichtung (28) vorgesehen ist, womit die Datensendeempfangseinrichtung (28) an- und abschaltbar ist.

2. Kommunikationsgerät nach Anspruch 1,
**dadurch gekennzeichnet,**
daß das Statussignal (22) zur Ansteuerung eines Anschlusses der Verbindung (24) zwischen den Teileinrichtungen des Kommunikationsgeräts (1) und/oder zwischen der Verbindung zwischen des Kommunikationsgeräts (1) und mindestens einem Peripheriegerät (2, 3) und zur Übermittlung an die Teileinrichtungen des Kommunikationsgeräts und/oder an die mit dem Kommunikationsgerät (1) koppelbaren Peripheriegeräte (2, 3) vorgesehen ist.

3. Kommunikationsgerät nach einem der Ansprüche 1 oder 2,
**dadurch gekennzeichnet,**
daß zur Kopplung der Teileinrichtungen des Kommunikationsgeräts und/oder der mit dem Kommunikationsgerät (1) koppelbaren Peripheriegeräte (2, 3) ein Datenbus (4, 5, 11, 24) vorgesehen ist, wobei zur Übertragung der über den Datenbus (4, 5, 11, 24) zu übertragenden Signale eine leitungsgebundene Verbindung, insbesondere ein digitaler Datenbus, oder eine drahtlose Verbindung, insbesondere ein als optische Verbindung ausgebildeter digitaler Datenbus, vorgesehen ist.

4. Kommunikationsgerät nach einem der Ansprüche 1 bis 3,
**dadurch gekennzeichnet,**
daß zur Übertragung des Statussignals (22) eine für die sonstige Übertragung nicht benötigte Leitung oder eine bereits belegte Leitung vorgesehen ist, wobei bei der Übertragung des Statussignals über eine bereits belegte Leitung ein sich von den übrigen über diese Leitung übertragenen Signalen unterscheidendes Signal vorgesehen ist.

5. Kommunikationsgerät nach einem der Ansprüche 1 bis 4,
**dadurch gekennzeichnet,**
daß das Kommunikationsgerät (1) ein Steuergerät für ein Fernsehgerät (1), ein Videoaufzeichnungsgerät (2), ein Satellitenempfänger (3) und/oder ein sonstiges digitales Wiedergabegerät (14) ist.

6. Kommunikationsgerät nach einem der Ansprüche 1 bis 4,
**dadurch gekennzeichnet,**
daß das Kommunikationsgerät (1) ein Fernsehgerät (1), ein Videoaufzeichnungsgerät (2), ein Satellitenempfänger (3) und/oder ein sonstiges digitales Wiedergabegerät (14) ist.

7. Kommunikationsgerät nach einem der Ansprüche 1 bis 6,
**dadurch gekennzeichnet,**
daß das Statussignal über eine Fernbedienung (10) und/oder über einen externen Eingang (12a) aktivierbar ist.

8. Verfahren zur Reduzierung des Stromverbrauchs bei einem Kommunikationsgerät (1) mit einer Stromsparschaltung (21), die für einen Energiesparbetrieb Schaltungsteile des Kommunikationsgeräts (1, 2, 3) und/oder mindestens eines mit dem Kommunikationsgerät (1) koppelbaren Peripheriegerätes (2, 3) deaktiviert, wobei die Kopplung von mindestens zwei Teileinrichtungen des Kommunikationsgerät (1) und/oder des Kommunikationsgerät (1) mit mindestens einem Peripheriegerät (2, 3) über eine Datensendeempfangseinrichtung (28), insbesondere eine Peripherielogikeinrichtung zur Steuerung einer Übertragung von Signalen zwischen den Teileinrichtungen des Kommunikationsgerät (1) und/oder zwischen dem Kommunikationsgerät (1) und mindestens einem Peripheriegerät (2,3) erfolgt,
**dadurch gekennzeichnet,**
daß die Stromsparschaltung (21) des Kommunikationsgeräts (1) im Ansprechen auf einen Schaltbefehl ein Statusignal (22) für die Datensendeempfangseinrichtung (28) erzeugt, womit die Datensendeempfangseinrichtung (28) an- und abschaltbar ist.

9. Verfahren nach Anspruch 8
**dadurch gekennzeichnet,**
daß das Statussignal (22) einen Anschluß der Verbindung (24) zwischen den Teileinrichtungen des Kommunikationsgeräts (1) und/oder zwischen der Verbindung zwischen der Kommunikationseinrichtung (1) und mindestens einem Peripheriegerät (2, 3) ansteuert und an die Teileinrichtungen des Kommunikationsgeräts und/oder an die mit dem Kommunikationsgerät (1) koppelbaren Peripheriegeräte (2, 3) übermittelt wird.

10. Kommunikationssystem mit mindestens einem Kommunikationsgerät nach einem der Ansprüche 1 bis 7.

## Claims

1. A communications unit (1, 2, 3, 15, 18) with a current-saving circuit (21) for the deactivation of circuit components of the communications unit (1, 2, 3) and/or of at least one peripheral unit (2, 3, 14) that is capable of being coupled with the communications unit (1) for energy-saving operation, whereby for the purpose of coupling at least two component devices (16, 17) of the communications unit (15) and/or for the purpose of coupling the communications unit (1, 2, 3, 15, 18) with at least one peripheral unit (2, 3, 14) the communications unit (1) comprises a data transmit-receive device (28), in particular a peripheral-logic device for controlling a transmission of signals between the component devices of the communications unit (1) and/or between the communications unit (1, 2, 3, 15, 18) and at least one peripheral unit (2, 3, 14, 18),
characterised in that
in response to a switching command for generating a status signal (22) for the data transmit-receive device (28) the current-saving circuit (21) of the communications unit (1) is provided, with which the data transmit-receive device (28) is capable of being switched on and off.

2. Communications unit according to Claim 1,
characterised in that
the status signal (22) is provided for the purpose of selecting a connection of the link (24) between the component devices of the communications unit (1) and/or between the link between the communications unit (1) and at least one peripheral unit (2, 3) and for the purpose of transmission to the component devices of the communications unit and/or to the peripheral units (2, 3) that are capable of being coupled to the communications unit (1).

3. Communications unit according to either of Claims 1 or 2,
characterised in that
for the purpose of coupling the component devices of the communications unit and/or the peripheral units (2, 3) that are capable of being coupled with the communications unit (1) a data bus (4, 5, 11, 24) is provided, whereby for the purpose of transmission of the signals to be transmitted via the data bus (4, 5, 11, 24) a line-conducted link, in particular a digital data bus, or a wireless link, in particular a digital data bus taking the form of an optical link, is provided.

4. Communications unit according to one of Claims 1 to 3,
characterised in that
for the purpose of transmission of the status signal (22) a line that is not needed for the further transmission or an already occupied line is provided, whereby in the case of the transmission of the status signal via an already occupied line a signal differing from the remaining signals transmitted via this line is provided.

5. Communications unit according to one of Claims 1 to 4,
characterised in that
the communications unit (1) is a control unit for a television set (1), for a video recorder (2), a satellite receiver (3) and/or for some other digital playback unit (14).

6. Communications unit according to one of Claims 1 to 4,
characterised in that
the communications unit (1) is a television set (1), a video recorder (2), a satellite receiver (3) and/or some other digital playback unit (14).

7. Communications unit according to one of Claims 1 to 6,
characterised in that
the status signal is capable of being activated via a remote control (10) and/or via an external input (12a).

8. A process for reducing the current consumption in a communications unit (1) with a current-saving circuit (21) which for energy-saving operation deactivates circuit components of the communications unit (1, 2, 3) and/or of at least one peripheral unit (2, 3) that is capable of being coupled with the communications unit (1), whereby the coupling of at least two component devices of the communications unit (1) and/or of the communications unit (1) with at least one peripheral unit (2, 3) is effected via a data transmit-receive device (28), in particular a peripheral-logic device for controlling a transmission of signals between the component devices of the communications unit (10) and/or between the communications unit (1) and at least one peripheral unit (2, 3),
characterised in that
in response to a switching command the current-saving circuit (21) of the communications unit (1) generates a status signal (22) for the data transmit-receive device (28), with which the data transmit-receive device (28) is capable of being switched on and off.

9. Process according to Claim 8,
characterised in that
the status signal (22) selects a connection of the link (24) between the component devices of the communications unit (1) and/or between the link between the communications unit (1) and at least one peripheral unit (2, 3) and is transmitted to the component devices of the communications unit and/or to the peripheral units (2, 3) that are capable of being coupled with the communications unit (1).

10. A communications system with at least one communications unit according to one of Claims 1 to 7.

## Revendications

1. Appareil de communication (1,2,3,15,18) comportant un circuit d'économie de courant (21) servant à désactiver des parties du circuit de l'appareil de communication (1,2,3) et/ou au moins un appareil périphérique (2,3,14) pouvant être couplé à l'appareil de communication (1), pour un fonctionnement avec économie d'énergie, l'appareil de communication (1) comportant, pour le couplage d'au moins deux dispositifs partiels (16,17) de l'appareil de communication (15) et/ou pour le couplage de l'appareil de communication (1,2,3,15,18) à au moins un appareil périphérique (2,3,14), un dispositif (28) d'émission/réception de données, notamment un dispositif logique périphérique pour la commande d'une transmission de signaux entre des dispositifs partiels de l'appareil de communication (1) et/ou entre l'appareil de communication (1,2,3,15,18) et au moins un appareil périphérique (2,3,14,18),
caractérisé en ce
que le circuit d'économie de courant (21) de l'appareil de communication (1) est prévu pour délivrer, en réponse à un ordre de commutation, un signal d'état (22) pour le dispositif d'émission/réception de données (28), signal grâce auquel le dispositif d'émission/réception de données (28) peut être branché et débranché.

2. Appareil de communication selon la revendication 1, caractérisé en ce que le signal d'état (22) est prévu pour la commande d'un raccordement de la liaison (24) entre les dispositifs partiels de l'appareil de communication (1) et/ou la liaison entre l'appareil de communication (1) et au moins un appareil périphérique (2,3) et/ou pour la transmission aux dispositifs partiels de l'appareil de communication et/ou aux appareils périphériques (2,3) pouvant être couplés à l'appareil de communication (1).

3. Appareil de communication selon l'une des revendications 1 ou 2, caractérisé en ce que pour le couplage des dispositifs partiels de l'appareil de communication et/ou des appareils périphériques (2,3) pouvant être couplés à l'appareil de communication (1), il est prévu un bus de transmission de données (4,5,11,24), et pour la transmission des signaux devant être transmis par l'intermédiaire du bus de transmission de données (4,5,11,24), il est prévu une liaison assujettie à une ligne, notamment à un bus numérique de transmission de données, ou une liaison sans fil, notamment un bus numérique de transmission de données agencé sous la forme d'une liaison optique.

4. Appareil de communication selon l'une des revendications 1 à 3, caractérisé en ce que pour la transmission du signal d'état (22), il est prévu une ligne, qui n'est pas nécessaire pour réaliser la transmission, ou une ligne déjà occupée, auquel cas lors de la transmission du signal d'état par l'intermédiaire d'une ligne déjà occupée, il est prévu un signal qui se distingue des autres signaux transmis par l'intermédiaire de cette ligne.

5. Appareil de communication selon l'une des revendications 1 à 4, caractérisé en ce que l'appareil de communication (1) est un appareil de commande pour un appareil de télévision (1), un appareil d'enregistrement vidéo (2), un récepteur de transmission par satellite (3) et/ou un autre appareil de reproduction numérique (14).

6. Appareil de communication selon l'une des revendications 1 à 4, caractérisé en ce que l'appareil de communication (1) est un appareil de télévision (1), un appareil d'enregistrement vidéo (2), un récepteur de transmission par satellite (3) et/ou un autre appareil de reproduction numérique (14).

7. Appareil de communication selon l'une des revendications 1 à 6, caractérisé en ce que le signal d'état peut être activé par l'intermédiaire d'une télécommande (10) et/ou par l'intermédiaire d'une entrée externe (12a).

8. Procédé pour réduire la consommation de courant dans un appareil de communication (1) comportant un circuit d'économie de courant (21), qui désactive, pour un fonctionnement d'économie d'énergie, des éléments de circuit d'appareil de communication (1,2,3) et/ou au moins un appareil périphérique (2,3) pouvant être couplé à l'appareil de communication (1), le couplage d'au moins deux dispositifs partiels de l'appareil de communication (1) et/ou de l'appareil de communication (1) avec au moins un appareil périphérique (2,3) s'effectuant par l'intermédiaire d'un dispositif d'émission/réception de données (28), notamment d'un dispositif logique périphérique pour la commande d'une transmission de signaux entre les dispositifs partiels d'un appareil de communication (1) et/ou entre l'appareil de communication (1) et au moins un appareil périphérique (2,3), caractérisé en ce que le circuit d'économie de courant (22) et l'appareil de communication (1) produisent, en réponse à une instruction de commutation, un signal d'état (21) pour le dispositif d'émission/réception de données (28), ce qui a pour effet que le dispositif d'émission / réception de données (28) peut être branché et débranché.

9. Procédé selon la revendication 8, caractérisé en ce que le signal d'état (22) commande un raccordement de la liaison (24) entre les dispositifs partiels de l'appareil de communication (1) et/ou la liaison entre le dispositif de communication (1) et au moins un appareil périphérique (2,3), et est transmis aux dispositifs partiels de l'appareil de communication et/ou aux appareils périphériques (2,3) pouvant être couplés à l'appareil de communication (1).

10. Système de communication comportant au moins un appareil de communication selon l'une des revendications 1 à 7.
